# EUROPÄISCHE PATENTSCHRIFT

(11) **EP 1 275 487 B1**
(45) Veröffentlichungstag und Bekanntmachung des Hinweises auf die Patenterteilung: **15.08.2007**
(21) Anmeldenummer: 02013233.8
(22) Anmeldetag: 17.06.2002
(51) Int. Cl.: B29C 45/76, B29C 45/50, G01L 1/26

(54) **Einrichtung zur Kraft- bzw. Drucküberwachung bei Spritzgiessmaschinen**
Apparatus for force or pressure monitoring in injection moulding machines
Dispositif pour surveiller la force ou la pression dans les machines à mouler par injection

(30) Priorität: 09.07.2001 AT 5412001
(43) Veröffentlichungstag der Anmeldung: 15.01.2003
(73) Patentinhaber: ENGEL AUSTRIA GmbH, 4311 Schwertberg (AT)
(72) Erfinder: Eppich, Stefan, A-4341 Arbing (AT); Ellinger, Alfred, A-4284 Tragwein (AT)
(74) Vertreter: Torggler, Paul Norbert

(56) Entgegenhaltungen:
- EP-A- 1 151 843
- DE-A- 19 950 534
- FR-A- 2 571 854
- US-A- 4 283 941
- PATENT ABSTRACTS OF JAPAN vol. 1997, no. 2, 28. Februar 1997 (1997-02-28) -& JP 08 281733 A (YAMASHIRO SEIKI SEISAKUSHO:KK), 29. Oktober 1996 (1996-10-29) -& DATABASE WPI Week 199702 Derwent Publications Ltd., London, GB; AN 1997-016038 XP002217640 & JP 08 281733 A

## Beschreibung

Die Erfindung bezieht sich auf eine Einrichtung zur Kraft- bzw. Drucküberwachung bei Spritzgießmaschinen, mit mindestens einem Sensor zur Messung der Verformung eines Maschinenteils, der durch den Schließ- oder Spritzdruck verformt wird.

Für Spritzgießmaschinen ist es typisch, daß sowohl beim Schließvorgang wie beim Spritzvorgang Kräfte unterschiedlicher Größenordnung auftreten und zu überwachen sind.

Die Schließkraft beispielsweise, mit welcher die Formhälften während des Einfüllens von Kunststoff in den Formhohlraum zusammengehalten werden, liegt typischerweise in der Größenordnung von 1.000 kN. Verbleibt andererseits irrtümlich ein Gegenstand zwischen den geöffneten Formhälften, soll eine beim Zusammendrücken dieses Gegenstandes auftretende Kraft von wenigen N genügen, eine Formschutzeinrichtung zu betätigen und den Schließvorgang zu beenden.

Auf der Einspritzseite laufen zwei unterschiedliche Vorgänge ab, welche ebenfalls am besten durch Überwachung der dabei auftretenden Kräfte bzw. Drücke geregelt werden können. Zunächst wird jeweils das einer Schnecke zugeführte Granulat plastifiziert und in den Schneckenvorraum gefördert. Dabei bewegt sich die Schnecke unter dem Einfluß des Staudruckes in Kunststoff allmählich nach hinten. Dieser Staudruck kann beispielsweise 40 bar betragen. Ist die gewünschte Menge an Kunststoff plastifiziert, wird die Drehung der Schnecke beendet und diese mit der Funktion eines Kolbens zum Einspritzen des Kunststoffs verwendet. Der hierbei auftretende Druck kann ohne weiteres 2000 bar betragen.

Besonders bei Kniehebelmaschinen und elektrisch betätigten Maschinen erfolgt die Überwachung des Druckes, indem die Dehnung, die Stauchung oder Biegung eines den Kräften ausgesetzten Maschinenteils überwacht wird, beispielsweise mittels Dehnmeßstreifen (siehe die Dokumente EP-A-1 151 843 und DE-A-19950534). Solche Einrichtungen funktionieren jedoch nicht über den ganzen auftretenden Kraftbereich. Soll daher auf der Schließseite die Kraft im Formschutzbereich und auf der Spritzseite im Staudruckbereich überwacht werden, muß sichergestellt werden, daß die hiefür geeigneten Sensoren im Bereich des Schließdruckes bzw. Einspritzdruckes nicht überlastet werden. Erfindungsgemäß ist hiezu ein Stützkörper vorgesehen, der den vom Sensor überwachten Maschinenteil entlastet, sobald der Schließ- bzw. Spritzdruck einen bestimmten, weniger als die Hälfte seines Maximalwertes betragenden Wert übersteigt.

Für jenen Kraftbereich, in welchem der Sensor überbrückt ist, kann ein weiterer Sensor vorgesehen sein, der den Schließ- bzw. Spritzdruck bis zu seinem maximalen Wert überwacht.

Die konstruktive Durchführung des Erfindungsgedankens wird anschließend anhand der Zeichnung erläutert. In dieser zeigt
Fig. 1 die Seitenansicht der Schließseite einer Spritzgießmaschine,
Fig. 2 die Seitenansicht eines Sensors für die Überwachung eines auf Druck beanspruchten Maschinenteils,
Fig. 3 die schematische Darstellung der Überwachung eines auf Biegung beanspruchten Gelenkes,
Fig. 4 die Überwachung eines auf Dehnung beanspruchten Holmes und
Fig. 5 die Anwendung der Erfindung auf eine im Schnitt dargestellte Spritzeinheit.

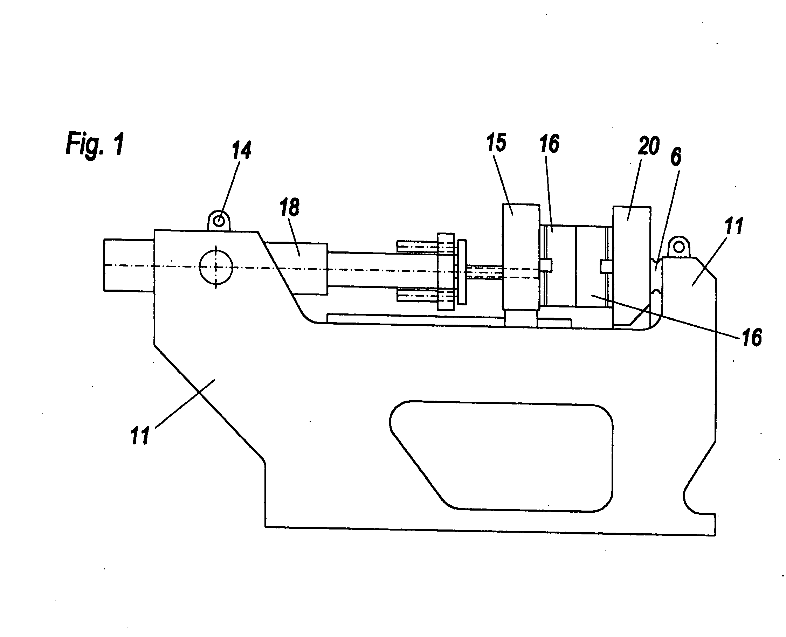

In Fig. 1 ist die Schließseite einer Spritzgießeinrichtung dargestellt, bei welcher auf einem holmlosen Maschinenrahmen 11 eine feststehende Formaufspannplatte 20 und eine bewegliche Formaufspannplatte 15 angeordnet sind. Jede Formaufspannplatte trägt eine Formhälfte 16. Die bewegliche Formaufspannplatte 15 ist durch einen schwenkbar gelagerten Hydraulikzylinder 18 verfahrbar, wodurch sich die durch die Formhälften gebildete Form öffnet und schließt. Unter dem Eindruck der Schließkraft auftretende Verformungen des Maschinenrahmens 11 werden einerseits durch Verschwenkung des Zylinders 18 um die Achse 14, andererseits durch Verformung der links und rechts an der feststehenden Formaufspannplatte 20 angeordneten Halteteile 6, die ein Biegegelenk bilden, ausgeglichen.

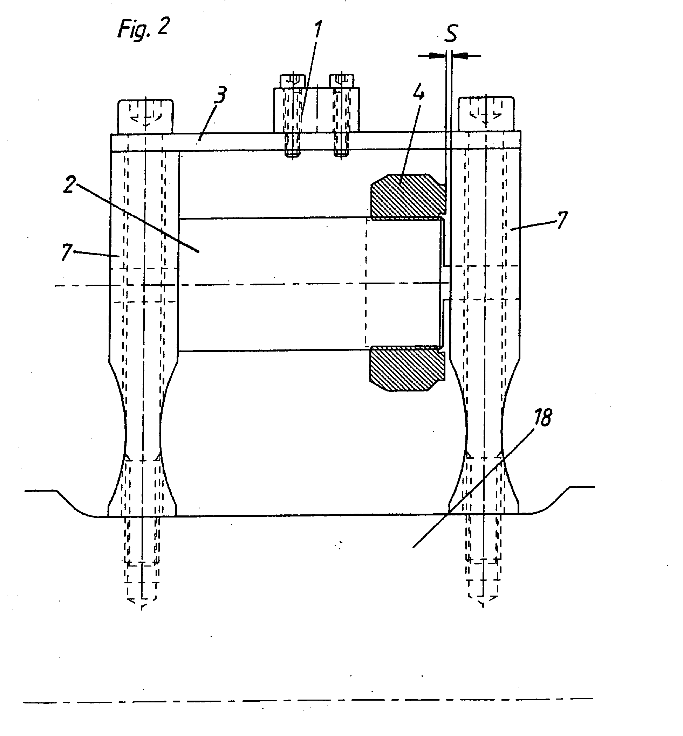

Eine Stauchung des Teiles 18 durch die beim Schließvorgang auftretende Kraft soll auch dann angezeigt werden, wenn diese Kraft nur durch einen das Schließen der Formhälften 16 verhindernden Gegenstand erzeugt wird und relativ klein ist. Hiezu dient die Einrichtung nach Fig. 2. Auf zwei Ständern 7, die mit dem Teil 18 verbunden sind, ist hier ein vom Sensor 1 überwachter Maschinenteil 3 angeordnet, welcher zunächst die Verformung des Teiles 18 mitmacht. Nach Überwindung des Spiels S durch Anliegen eines Ständers 7 an der Anschlagmutter 4 verhindert der Stützkörper 2 eine weitere Verkürzung des überwachten Maschinenteils 3.

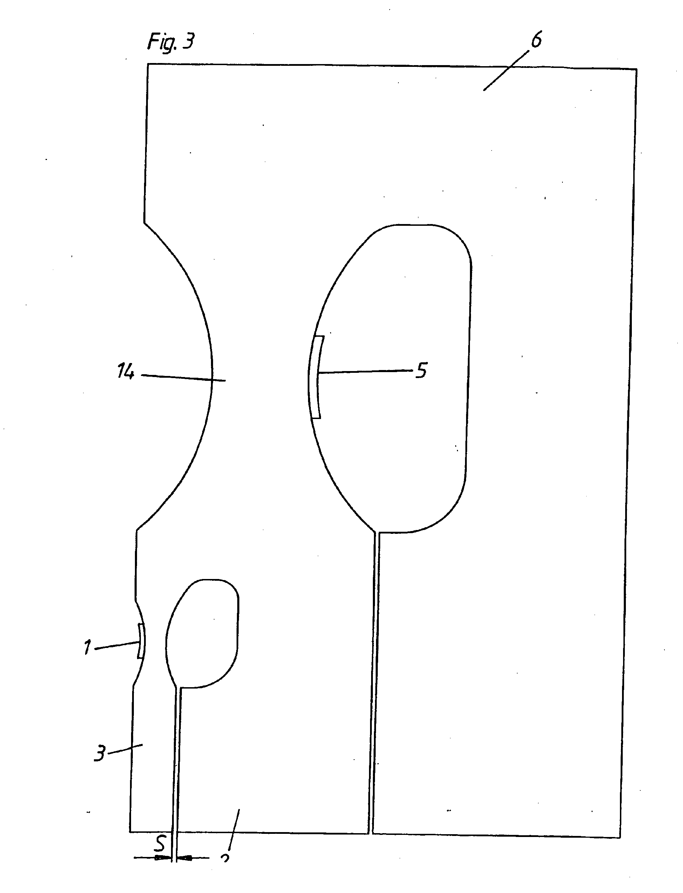

Analog verläuft die Überwachung des in Fig. 3 dargestellten Biegegelenks. Auch hier verhindert ein Stützkörper 2 die weitere Verformung des vom Sensor 1 überwachten Maschinenteils 3 sobald der das Spiel S definierende Spalt geschlossen ist. Anschließend registriert nur noch der Sensor 5 die Verformung des Steges 14.

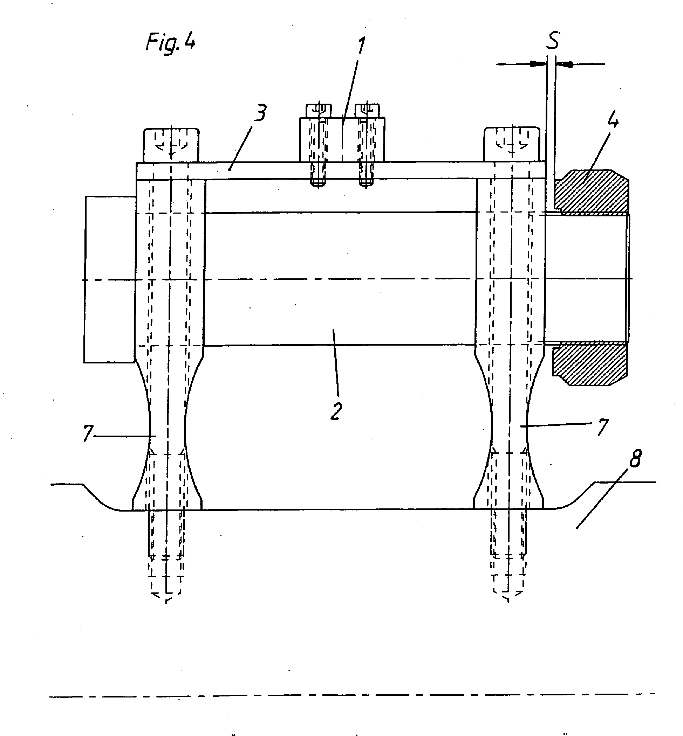

Die meisten Spritzgießmaschinen sind mit Holmen versehen, welche beim Aufbringen der Schließkraft gedehnt werden. In Fig. 4 ist ein solcher Holm 8 dargestellt, dessen Dehnung sich auf den Maschinenteil 3 überträgt, der vom Sensor 1 überwacht wird. Wiederum wird der Sensor 1 überbrückt, wenn das Spiel S aufgebraucht ist und der Ständer 7 an der Anschlagmutter 4 anliegt.

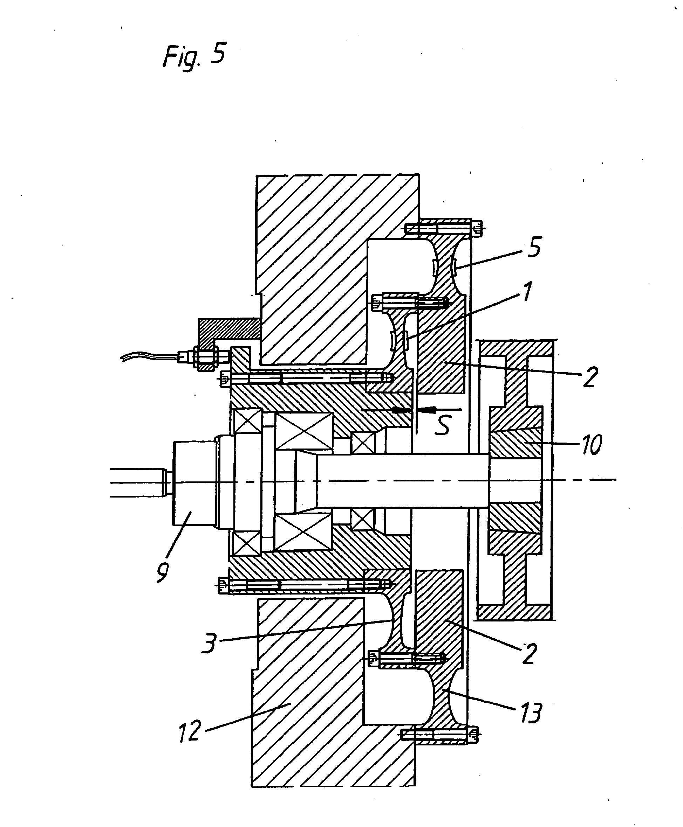

In Fig. 5 ist der für die Erfindung interessante Teil der Spritzeinrichtung einer Spritzgießmaschine dargestellt. Es handelt sich um eine Dosierschnecke 9, welche durch einen Motor 10 in Drehung versetzt und durch eine axial verschiebbare Druckplatte 12 in einem nicht dargestellten feststehenden Zylinder verschiebbar ist. Bei der Drehung der Schnecke 9 durch den Motor 10 tritt der eingangs beschriebene Staudruck auf, welcher den ringförmigen Maschinenteil 3 bei feststehender Druckplatte 12 verformt. Diese Verformung wird vom Sensor 1 überwacht. Nach Abschluß des Dosiervorganges bewegt sich die Platte 12 in Fig. 5 nach links, wodurch das Spiel S verschwindet und der Stützkörper 2 den Sensor 1 entlastet. Den eigentlichen Spritzdruck, der wesentlich höher ist als der Staudruck, mißt der Sensor 5.

## Patentansprüche

1. Einrichtung zur Kraft- bzw. Drucküberwachung bei Spritzgießmaschinen, mit mindestens einem Sensor zur Messung der Verformung eines Maschinenteils, der durch den Schließ- oder Spritzdruck verformt wird, **dadurch gekennzeichnet, daß** ein Stützkörper (2) vorgesehen ist, der den vom Sensor (1) überwachten Maschinenteil (3) entlastet, sobald der Schließ- bzw. Spritzdruck einen bestimmten, weniger als die Hälfte seines Maximalwertes betragenden Wert übersteigt.

2. Einrichtung nach Anspruch 1, **dadurch gekennzeichnet, daß** durch die überwachte Verformung ein durch einen Anschlag (4) am Stützkörper (2) begrenztes Spiel (S) überwunden wird.

3. Einrichtung nach Anspruch 2, **dadurch gekennzeichnet, daß** der Anschlag (4) verstellbar ist.

4. Einrichtung nach einem der Ansprüche 1 bis 3, **dadurch gekennzeichnet, daß** mindestens ein weiterer Sensor (5) vorgesehen ist, der den Schließ- bzw. Spritzdruck bis zu seinem Maximalwert überwacht.

## Claims

1. Device for monitoring force and pressure in injection moulding machines, with at least one sensor for measuring the deformation of a machine part that is deformed by the closing or injection pressure, **characterised in that** a supporting body (2) is provided that relieves the machine part monitored by the sensor (1) as soon as the closing or injection pressure exceed a certain value that is less than half of its maximum value.

2. Device according to claim 1, **characterised in that** by means of the deformation monitored, a clearance (S) delimited by a stop (4) on the supporting body (2) is overcome.

3. Device according to claim 2, **characterised in that** said stop (4) is adjustable.

4. Device according to one of claims 1 to 3, **characterised in that** at least one further sensor (5) is provided that monitors the closing and injection pressure up to its maximum value.

## Revendications

1. Dispositif pour surveiller la force ou la pression dans des machines à mouler par injection, comprenant au moins un capteur pour la mesure de la déformation d'une partie de machine, le capteur étant déformé sous l'effet de la pression de fermeture ou d'injection, **caractérisé en ce qu'**est prévu un corps d'appui (2), qui décharge la partie de machine (3) surveillée par le capteur (1) dès que la pression de fermeture ou d'injection dépasse une valeur déterminée, inférieure à la moitié de sa valeur maximale.

2. Dispositif selon la revendication 1, **caractérisé en ce qu'**un jeu (S), limité par une butée (4) sur le corps d'appui (2), est surmonté du fait de la déformation surveillée.

3. Dispositif selon la revendication 2, **caractérisé en ce que** la butée (4) est réglable.

4. Dispositif selon l'une des revendications 1 à 3, **caractérisé en ce qu'**au moins un autre capteur (5) est prévu, surveillant la pression de fermeture ou d'injection jusqu'à sa valeur maximale.
